# EUROPEAN PATENT APPLICATION

(11) **EP 0 823 587 A1**
(43) Date of publication of application: **11.02.1998**
(21) Application number: 97305813.4
(22) Date of filing: 01.08.1997
(51) Int. Cl.: F21V 8/00, G02F 1/1333, G02F 1/1335

(54) **Light guiding type illumination device and light guiding type display device**

(30) Priority: 07.08.1996 JP 208621/96; 06.09.1996 JP 236935/96; 23.06.1997 JP 166248/97
(71) Applicant: SEIKO INSTRUMENTS INC., Chiba-shi, Chiba 261 (JP)
(72) Inventor: Taniguchi, Kaori, Mihama-ku, Chiba-shi, Chiba (JP); Shino, Naotishi, Mihama-ku, Chiba-shi, Chiba (JP); Senbonmatsu, Shigeru, Mihama-ku, Chiba-shi, Chiba (JP); Ebihara, Teruo, Mihama-ku, Chiba-shi, Chiba (JP); Motte, Shunichi, Mihama-ku, Chiba-shi, Chiba (JP); Yamamoto, Shuhei, Mihama-ku, Chiba-shi, Chiba (JP); Yamazaki, Osamu, Mihama-ku, Chiba-shi, Chiba (JP); Hoshino, Masafumi, Mihama-ku, Chiba-shi, Chiba (JP); Sakama, Hiroshi, Mihama-ku, Chiba-shi, Chiba (JP); Fukuchi, Takakazu, Mihama-ku, Chiba-shi, Chiba (JP)
(74) Representative: Sturt, Clifford Mark

(57) **Abstract**

The light guiding type illumination device according to the invention comprises a light scattering layer (8) held by at least two substrates (10a,10b) facing each other, a reflection layer (6a) disposed on the rear of the light scattering layer (8), and a light source (1a) of which light falls on end faces of the substrates (10a,10b) and the light scattering layer (8). On the other hand, the light guiding type display device according to the invention comprises a light scattering layer (8a,8b) held by at least two substrates (10a,10b) having electrodes (11a), a reflection layer (6a) disposed on the rear of the light scattering layer (8a,8b), and a light source (1b) of which light falls on end faces of the substrates (10a,10b) and the light scattering layer (8a,8b) located before the reflection layer (6a).

## Description

### BACKGROUND OF THE INVENTION

The present invention relates to a light guiding type illumination device being a kind of a surface illumination device, and a light guiding type display device being a kind of a reflection type liquid crystal display having a night illumination function.

The surface illumination device is generally used as a back illumination for a flat display in a note type personal computer, etc. The liquid crystal display is widely used for displays in various products from the merits of thinness, light weight, low power consumption, etc.; especially, the reflection type liquid crystal display not using a back illumination has been spotlighted in recent years.

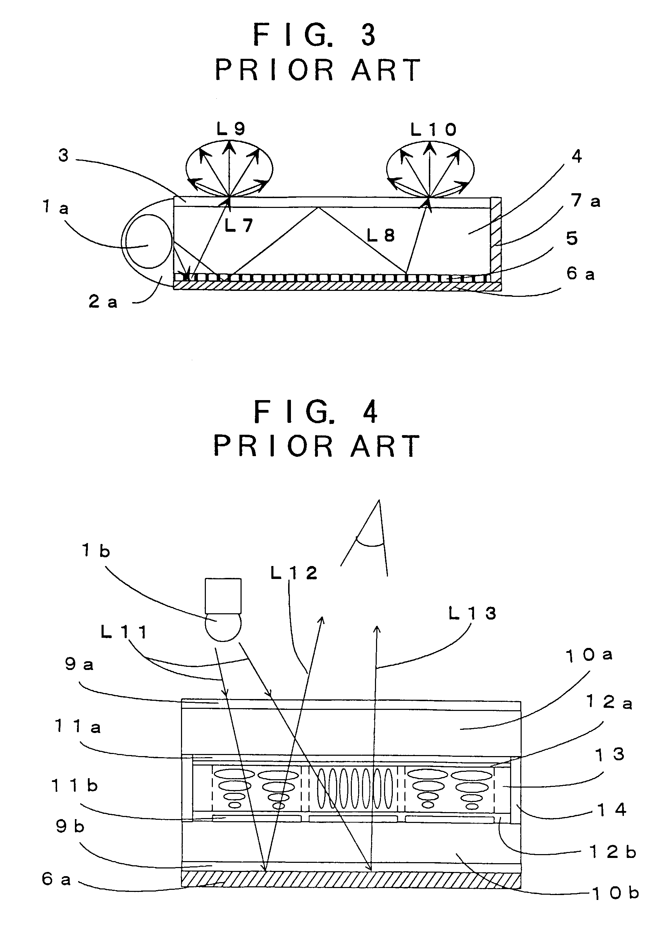

First, the surface illumination device using a FL lamp 1a for the light source will be described with reference to Fig. 3, as an example of a general surface illumination device.

The surface illumination device is comprised of a diffusion plate 3, light guiding plate 4, dot print 5, reflection layer 6a, FL lamp la, and reflection case 2a. The reflection case 2a is made in such a structure as to efficiently converge light from the FL lamp la into the light guiding plate 4.

The propagation of light fallen on the light guiding plate 4 from the FL lamp la is determined by the magnitude of an angle of incidence of light to the perpendicular of the light guiding plate surface and a critical angle specified by a refractive index of a material in contact with the light guiding plate 4. A light L7 fallen on a surface of the light guiding plate with a smaller angle than the critical angle reflects on the reflection layer 6a and returns to the light guiding plate 4, and penetrates through the diffusion plate 3 to radiate outside of the illumination surface as a diffusion light L9. On the other hand, a light L8 fallen on a surface of the light guiding plate with a larger angle than the critical angle propagates inside of the light guiding plate 4 while repeating total reflections on the surfaces of the light guiding plate. And, when the light L8 reaches the dot print 5 with a white paint or the like printed, the difference of the refractive indexes of the dot print 5 and the light guiding plate 4 changes the angle of reflection of the light L8, so that the light L8 advances toward the diffusion plate 3 to escape from the light guiding plate 4. And, the light L8 penetrates through the diffusion plate 3 to radiate outside of the illumination surface as a white diffusion light L10. The diffusion plate 3 is an element for adjusting an outgoing direction of light; as to a directional light falling on a surface of the light guiding plate with an angle of incidence larger than the critical angle and thereafter escaping from the light guiding plate, the diffusion plate 3 has a function to diffuse the escaping light in a totally wide range of angle and transform the light into a white diffusion light and radiate outside of the illumination surface. A reflection plate 7a is to effectively utilize a light propagating through the light guiding plate 4 so as not to wastefully escape the light from the side surface of the surface illumination device, and reflects the light reaching a part thereof and returns it inside of the light guiding plate 4.

Generally, the illuminance of diffusion light (L9 or L10) radiated outside of the illumination surface is intense near the light source, and attenuates as the distance from the light source increases. Consequently, as a method of unifying the illuminance distribution of an illumination surface, a method of optimizing the optical design of dot patterns of the dot print 5 as disclosed in, for example, JP-A-57-128383, and a method of optimizing a minute optical working of the light guiding plate itself as disclosed in, for example, JP-A- 6-281929 are widely used.

Next, the reflection type liquid crystal display of the TN (Twisted Nematic) mode having an LED emitter 1b for the night illumination light source will be described with reference to Fig. 4, as an example of a general reflection type liquid crystal display.

This reflection type liquid crystal display is provided with an LED emitter 1b, upper polarizing plate 9a, upper substrate 10a, upper transparent electrode 11a, upper orientational film 12a, TNLC layer 13, lower orientational film 12b, lower transparent electrode llb, lower substrate 10b, lower polarizing plate 9b, and reflection layer 6a. The LED emitter 1b is disposed to irradiate light from above or obliquely above the upper polarizing plate 9a. The upper and lower orientational films 12a, 12b are worked such that liquid crystal molecules inside the TNLC layer 13 are oriented with a 90° twist when no voltage is applied. The polarizing directions of the upper and lower polarizing plates 9a, 9b coincide with the orientational directions of the upper and lower orientational films 12a, 12b, respectively. Accordingly, both are in the orthogonal relation.

This reflection type liquid crystal display of the TN mode performs displays utilizing the optical rotatory power that a twist of molecule orientation of the TNLC rotates a light passing through the polarizing plate. When no voltage is applied, an incident light L11 to the reflection type liquid crystal display rotates in accordance with a twist of the liquid crystal molecules, and transmits through the upper and lower polarizing plates 9a, 9b two times each, totally four times, to be seen as a dark white display (L12). On the other hand, when a voltage is applied, since the twist of the liquid crystal molecules inside the TNLC layer 13 is released, the incident light does not rotate and transmits through the upper polarizing plate 9a, and then the light is interrupted by the lower polarizing plate 9b to be observed as a black display (L13).

Generally, the light transmittance of one polarizing plate is about 40 ∼ 45 %. Since the reflection type liquid crystal display as described above has to necessarily use one or two polarizing plates of this kind, the display surface looks dim even under a bright light from outside, and a bright "white" is difficult to be displayed. Therefore, illumination is necessary for the reflection type liquid crystal display under a faint light from outside in the night. However, since the foregoing reflection type liquid crystal display utilizes a light transmitting through the polarizing plates for display, it is not effective to irradiate a light from the side of the reflection type liquid crystal display. This applies to the reflection type liquid crystal display of the display mode using the polarizing plates in the same manner.

From the reason as described above, to illuminate a display surface from above is a general method for the night illumination of the reflection type liquid crystal display.

The present surface illumination device as described above necessitates an advanced and subtle optical design to unify the illuminance distribution of an illumination surface. And, in order to reduce the directivity of an illumination surface and to make the surface emit a uniform white color, it is necessary to dispose an element for adjusting an outgoing direction of light such as a light diffusion plate on the light guiding plate. However, to apply these creates a major factor to increase cost for the surface illumination device.

Further, the present reflection type liquid crystal display has a dim display surface even under a normal use as described above, and still more necessitates any illumination under a faint light from outside. However, the reflection type liquid crystal display using the TNLC uses a light transmitting through the polarizing plates to display as described above, and the illumination from the side of the reflection type liquid crystal display cannot achieve a sufficient effect. Accordingly, to illuminate from above the display surface is needed, therefore, it is unavoidable to increase the thickness of the display device. This is contrary to the "thinness" being one of the merits of the reflection type liquid crystal display.

### SUMMARY OF THE INVENTION

It is therefore an object of the present invention to provide a construction for solving the foregoing problems, and in detail, the light guiding type illumination device being a kind of the surface illumination device and the light guiding type display device being a kind of the reflection type liquid crystal display having the night illumination function contain the constructions as follows.

The light guiding type illumination device is comprised of a light scattering layer held by two substrates facing each other, a reflection layer disposed on the rear of the light scattering layer, and a light source of which light falls on end faces of the substrates and the light scattering layer.

Preferably the light scattering layer has a uniform scattering intensity inside the layer, however, the light scattering layer may be patterned two-dimensionally into a transparent state and a scattering state, and may have a gradation applied to the scattering intensity in relation to a direction in which an incident light from the light source is guided.

Since the light scattering layer is necessary to have the light diffusion function, the light scattering layer is preferably a scattering type liquid crystal layer, especially preferably is an ultraviolet hardening type liquid crystal layer, and especially is a polymer network liquid crystal layer of the type.

The substrates are provided with reflection plates and a light storing substance on at least one or more sides of the substrates, in order to effectively utilize light that is guided inside the device and reaches the sides of the substrates.

The reflection layer is preferably formed of a material to efficiently reflect light, for example, a metal such as an aluminum, silver, nickel, chrominum, palladium, or rhodium, a metal containing at least one or more of alloys or oxides of these metals, or dielectric multilayer films. When making a colored illumination device, at least one or more colored layers are formed on the upper surface of the reflection layer.

The light source is an incandescent lamp, EL emitter, FL lamp, or LED emitter. When using an LED emitter for a white light source, a violet LED emitter is incorporated into a light guiding body for guiding light from a light source with fluorescent materials dispersed, and is optically adhered to the substrates. Further, the light source may contain a light storing substance to effectively use light from a light source.

Next, the light guiding type display device is comprised of a light scattering layer held by at least two substrates having electrodes, a reflection layer disposed on the rear of the light scattering layer, and a light source of which light falls on end faces of the substrates and the light scattering layer located before the reflection layer.

Necessarily the electrodes formed on an upper substrate are transparent.

Since the light scattering layer is necessary to have the light diffusion function, the light scattering layer is a scattering type liquid crystal layer, especially preferably is an ultraviolet hardening type liquid crystal layer, and especially is a polymer network liquid crystal layer of the type.

The substrates are provided with reflection plates and a light storing substance on at least one or more sides of the substrates, in order to effectively utilize light that is guided inside the device and reaches the sides of the substrates.

The reflection layer is preferably formed of a material to efficiently reflect light, for example, a metal such as an aluminum, silver, nickel, chrominum, palladium, or rhodium, a metal containing at least one or more of alloys or oxides of these metals, or dielectric multilayer films. When making a colored illumination device to pursue preference, at least one or more colored layers are formed on the upper surface of the reflection layer.

The light source is an incandescent lamp, EL emitter, FL lamp, or LED emitter. When using an LED emitter for a white light source, a violet LED emitter is incorporated into a light guiding body for guiding light from a light source with fluorescent materials dispersed, and is optically adhered to the substrates located above the reflection layer. Further, the light source may contain a light storing substance to effectively use light from a light source.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF EXPLANATION OF THE DRAWINGS

In the drawings:
Fig. 1 is a constructional illustration for explaining the principle of a light guiding type illumination device;
Fig. 2 is a constructional illustration for explaining the principle of a light guiding type display device;
Fig. 3 is a schematic sectional view showing a surface illumination device using a conventional FL lamp as the light source;
Fig. 4 is a schematic sectional view showing a reflection type liquid crystal display of the TN mode having a conventional LED emitter;
Fig. 5 is a perspective view of a light guiding type illumination device using an LED emitter as the light source;
Fig. 6 is a perspective view of a light guiding type illumination device provided with an EL emitter, having a gradation of scattering intensity in a light scattering layer;
Fig. 7 is a graph showing a relation between a transmittance of a light scattering layer and a distance from the light source in the light guiding type illumination device according to the invention;
Fig. 8 is a perspective view of a light guiding type display device using an LED emitter as the light source;
Fig. 9 is a typical sectional view of a light guiding type display device for a watch built-in type; and
Fig. 10 is a projecting view of a light guiding type display device applying the PSCT to a light scattering layer.

### DESCRIPTION OF THE PREFERRED EMBODIMENT

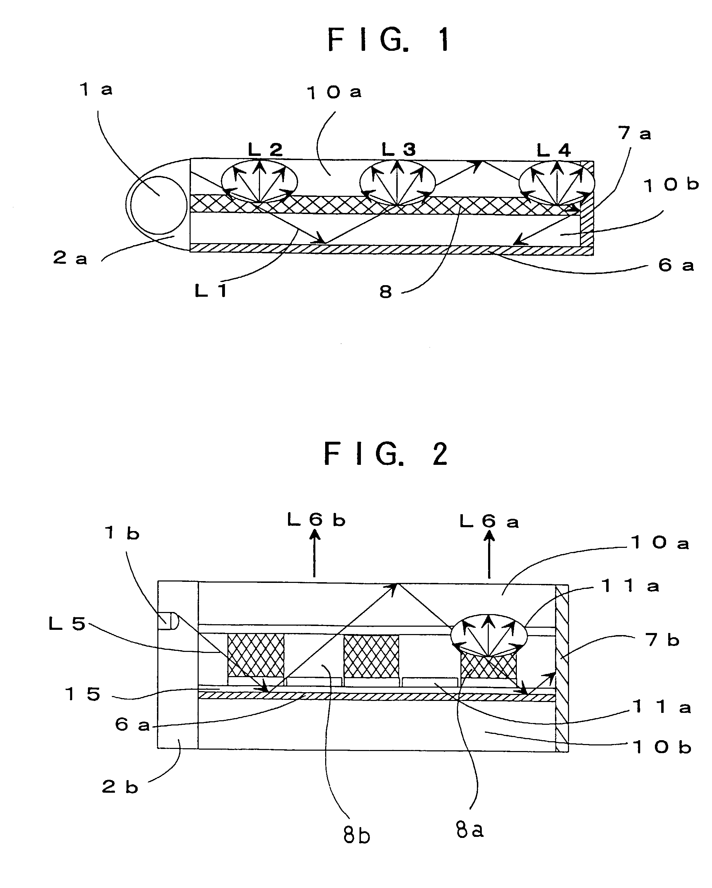

The principle of the present invention will be described with reference to Fig. 1 and Fig. 2.

Fig. 1 is an illustration to show the principle of the light guiding type illumination device. The light guiding type illumination device comprises an upper substrate 10a, light scattering layer 8, lower substrate 10b, reflection layer 6a, FL lamp 1a, reflection case 2a, reflection plate 7a. The reflection case 2a is made in such a structure as to efficiently converge light from the FL lamp la into a space between the upper substrate 10a and the reflection layer 6a.

The upper and lower substrates 10a, 10b are transparent substrates also functioning as light guiding plates. Although the conventional surface illumination device uses one light guiding plate, this light guiding type illumination device uses two light guiding plates, and a light guiding efficiency can be enhanced.

The light scattering layer 8 employs the PNLC (polymer network liquid crystal) being a scattering type liquid crystal that assumes a scattering state when no voltage is applied and a transparent state when a voltage is applied, a kind of the polymer dispersion type liquid crystal. This light scattering layer 8 is formed of a continuous layer of liquid crystals, which contains an ultraviolet hardening type polymer of a network structure. This layer is made in such a manner that an ultraviolet hardening type polymer, a nematic liquid crystal having a positive dielectric anisotropy, and a mixed liquid in which an ultraviolet hardener is uniformly mixed and dissolved are injected in an isotropic state between the upper and lower substrates 10a, 10b having a constant gap and exposed in the ultraviolet light to harden the polymer only. Here, the rate of the liquid crystal against the,ultraviolet hardening type polymer is preferably 70 ∼ 99%. And, the pore size of the network structure is about the light wave length, should be uniform, and is preferably 0.5 ∼ 0.25 µm. In order to make a light scattering layer capable of optimally scattered light by using the liquid crystal blended with the foregoing condition, the layer thickness of the light scattering layer 8 should be made about 9 ∼ 10 µm, and the ultraviolet light exposure should be applied about one minute with 80 mW/cm² by a metal halide lamp.

The polymer and the liquid crystal molecules are used which the refractive index of the former and the longitudinal refractive index of the latter are approximately equal. However, since the liquid crystal molecules orient to various directions from the networks as the starting points, there are microscopic refractive index differences in the PNLC layer, and this effect transforms an incident light into a scattered light. If the light scattering layer 8 is made of such a scattering type liquid crystal, the layer 8 is not needed to be confined to the PNLC.

The scattering type liquid crystal includes the dynamic scattering mode liquid crystal and the phase transition type liquid crystal. The former has a problem of the current consumption due to the current drive and a problem relating to the reliability of the liquid crystal itself, etc. The latter has a problem of the deterioration of the liquid crystal due to the display system utilizing the thermal clouding, etc. Further, there is the polymer dispersion type liquid crystal such that polymer capsules contain liquid crystals. However, in this type, the rate of the polymer in the mixed liquid of the liquid crystals is higher than that of the PNLC, and the wall surface of the polymer exerts an strong influence on the liquid crystals; and therefore, without a high voltage applied, a good display cannot be expected, which is a problem. These problems do not turn out a major problem as long as these are used as the light guiding type illumination device without displays, however, using these for the light guiding type display device described later presents an acute problem. Therefore, the PNLC is considered to be best suited for the light scattering layer 8.

The reflection plate 7a is to effectively utilize a light guided into a space between the upper substrate 10a and the reflection layer 6a so as not to wastefully escape the light from the side surface of the light guiding type illumination device, and reflects the light reaching a part thereof and returns it inside.

A light L1 from the FL lamp 1a is guided into the space between the upper substrate 10a and the reflection layer 6a by the condensation function of the reflection case 2a. And, a part of the light L1 becomes scattered lights L2, L3, and L4 by the light scattering effect of the PNLC when the light L1 transmits through the light scattering layer 8. Thus, the guiding and scattering of light are repeated, and the light reaching the side of the light guiding type illumination device is again returned inside the device by the reflection plate 7a to be effectively used. In consequence, the upper substrate 10a becomes an uniformly bright and white surface illuminant.

Thus, the light guiding type illumination device as in the foregoing construction will make the optical design of a dot print for the scattering function and the optical working of a light guiding plate in the conventional surface illumination device needless. Further, the foregoing light guiding type illumination device will make an element for adjusting an outgoing direction of light such as a light diffusion plate needless, owing to the scattering effect by the light scattering type liquid crystal layer. Accordingly, the light guiding type illumination device can be achieved which is inexpensive and simply made up.

Next, the principle of the light guiding type display device of the invention will be described with reference to Fig. 1. The light guiding type display device consists of a reflection type liquid crystal display panel comprising an upper substrate 10a, upper transparent electrode 11a, light scattering layer 8, lower transparent electrode 11b, insulating film 15, reflection layer 6a, lower substrate 10b, and light storing substance 7b, and a light source part comprising an LED emitter 1b and light guiding body 2b for guiding light from a light source. The structure is designed so as to efficiently converge light from the LED emitter 1b into a space between the upper substrate 10a and the reflection layer 6a through the light guiding body 2b for guiding light from a light source.

The upper substrate 10a is a transparent substrate also functioning as the light guiding plate. The lower substrate 10b is not needed to be specified as to the material or the color, since the reflection layer 6a is disposed inside the panel. However, if the reflection layer 6a is disposed under the lower substrate 10b as an externally fitted reflection layer, the lower substrate 10b is needed to be a transparent substrate, and preferably it should have the property to guide light.

The light storing substance 7b is to effectively utilize a light guided into the upper substrate 10a and the light scattering layer 8 so as not to wastefully escape the light from the side of the light guiding type display device. The light storing substance 7b stores the light arriving thereat as the light energy, and emits the light when the external light weakens.

The light scattering layer 8 is the PNLC layer; and the manufacturing process of the PNLC layer, the structure of the polymer, the principle of scattering an incident light, and the optimum condition for the scattering intensity and the like are the same as those of the light guiding type illumination device. If the light scattering layer 8 is made of such a scattering type liquid crystal, it is not confined to the PNLC.

The action of an incident light when illumination is applied will now be described. A light L5 from the LED emitter 1b falls on an area between the upper substrate 10a and the reflection layer 6a through the light guiding body 2b for guiding light from a light source, and propagates through the area therebetween. When the light L5 transmits through a light scattering area 8a where no voltage is applied in the PNLC layer, a part of the light L5 becomes a scattered light 6a by the light scattering function of this layer. On the other hand, in a light penetrating area 8b where a voltage is applied, liquid crystal molecules in the PLNC layer orient in virtually the same direction and have not the light scattering function; and accordingly, the light L5 transmits virtually straight without being scattered. Accordingly, the light from the LED emitter 1b cannot be viewed in this area, only a light L6b reflected by the reflection layer 6a reflecting a light from outside the light guiding type display device can be viewed. A light transmitting through the light penetrating area 8b continues to transmit through the area between the upper substrate 10a and the reflection layer 6a, and the light repeats the action shown in the light penetrating area 8b when a voltage is applied and the action shown in the light scattering area 8a when no voltage is applied. A light finally reaching the light storing substance 7b disposed on the side of the light guiding type display device is stored in this part as a light energy. The light storing substance 7b emits light from the stored light energy when the external light weakens, and returns the light inside the device to effectively use light.

The light guiding type display device having the foregoing structure and construction also functions as the foregoing light guiding type illumination device, since the liquid crystal layer is the light scattering type liquid crystal layer. In other words, an incidence of light from the side of the device will provide a bright display surface. Therefore, it is not necessary to place a light source on an upper part of the display surface, and the thickness of the light guiding type display device can be thinned to almost the same extent as the thickness of the panel.

Further, this light guiding type display device can be used as a mere reflection type liquid crystal display in theory with a light source not being lighted, however, it is possible to provide a display device having a high contrast by using the light guiding type display device with a light source lighted. This is an effect resulting from that the scattering intensity of the scattering area can be still more enhanced according to the theory of the foregoing light guiding type display device, since the light from the light source transmits not only in the scattering area but also emits outside therefrom. Using the light guiding type display device in such a system can provide a display device of the inner illumination type thinner than a usual transmission type liquid crystal display having the back lighting applied.

### (Embodiment 1)

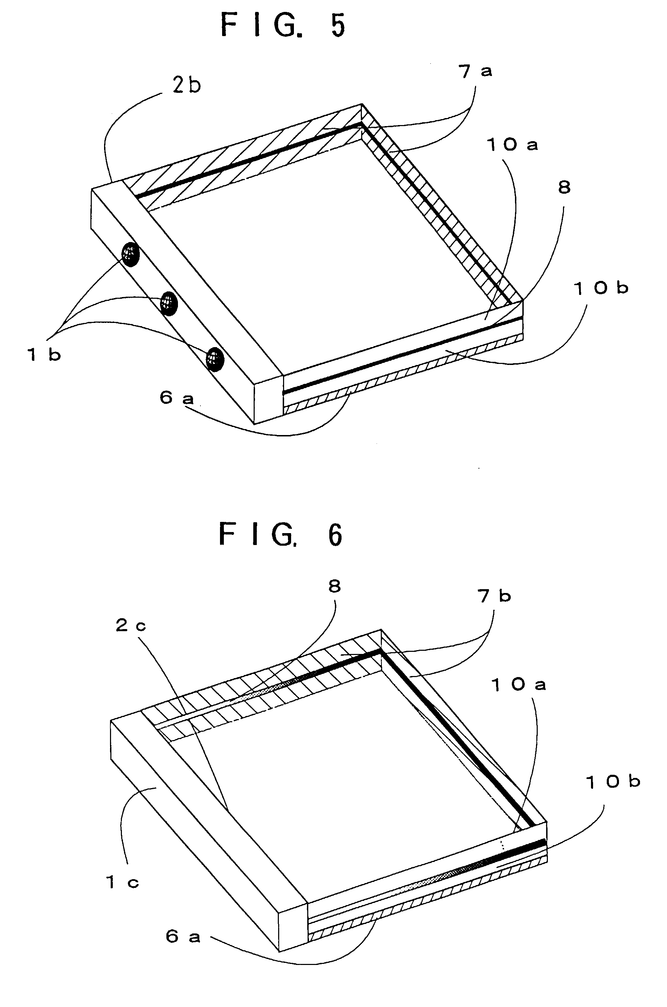

As an embodiment, Fig. 5 illustrates a light guiding type illumination device using an LED emitter for a light source in a perspective view.

In Fig. 5, the upper and lower substrates 10a, 10b are transparent glass substrates. The LED emitters 1b are light sources, and red, green, and blue of the LED emitters 1b are mixed and changed into white. The LED emitters 1b are incorporated into the light guiding body 2b for guiding light from a light source. The light guiding body 2b for guiding light from a light source is formed of a white heat resisting resin, and is in an optically tight contact with one side of the light guiding type illumination device. And, the light guiding body 2b is designed such that a light form the light source does not fall under the reflection layer 6a and effectively falls on the light guiding type illumination device. The reflection layer 6a is a polyester film having an aluminum film on the surface. The reflection plates 7a are placed on the three sides (two sides in Fig. 5) except for the side having the light source for the light guiding type illumination device, and are formed of aluminum films, the same as the reflection layer 6a. The light scattering layer 8 is formed of the PNLC, and the thickness of the layer is about 10 µm. This layer is made in such a manner that a mixed liquid in which an ultraviolet hardening type polymer, a nematic liquid crystal having a positive dielectric anisotropy, and an ultraviolet hardener, etc. are uniformly mixed and dissolved is injected in an isotropic state into a space between the upper and lower substrates 10a, 10b adhered with the gap of 10 µm, and exposed in an ultraviolet light to harden the polymer only. To adhere the reflection layer 6a to the lower substrate 10b and to adhere the reflection plates 7a to the light guiding type illumination device both employ a transparent optical adhesive, which does not leak light outside the light guiding type illumination device.

The upper and lower substrates 10a, 10b may use transparent polymer films other than the foregoing. As for a base material used for the upper and lower substrates, a material having the property to guide light is better suited.

The LED emitters 1b for the light source may emit a colored light by using a combination of the other luminescent colors than the combination of the foregoing colors or a monochromatic light source. Or, an incandescent lamp, EL emitter, FL lamp, and other light sources may be used. When using an incandescent lamp or a FL lamp, a reflection case to converge light is preferably used; and when using an EL emitter, it is preferable to bring the EL emitter body into a direct and tight contact with a surface of the light guiding type illumination device on which an incident light falls so as to guide light efficiently into the light guiding type illumination device. Further, even when using this kind of light source, the light source may emit a colored light by using a combination of the other luminescent colors than the white color or a monochromatic light source.

Further, a connecting part for guiding light from the light source into the light guiding type illumination device, for example, the reflection case may use a material containing the light storing substance. A material (produced by NEMOTO Chemical Specialties) in which strontium aluminate SrAl 202 is the base crystal and rare earth elements are added on, or a compound in which a small quantity of copper is added in zinc sulfide ZnS is suited for the light storing substance. The effect of the light storing substance causes the foregoing connecting part to function as an auxiliary light source, and the connecting part continues to emit light for a certain period of time after the light source is turned off, thus realizing energy saving.

Incidentally, generally the LED is a colored emitter, and in the foregoing case, mixing the three colors of red, green, and blue produces a white color for the light source. However, the white light source may be achieved, as another means, by employing a violet LED emitter for the light source and using a fluorescent material having a light wavelenth transforming function to transform a short wavelength into a long wavelength. For example, using a red fluorescent pigment (SHINROIHI Chemicals, FA - 001) emitting a red light and a green fluorescent pigment (SHINROIHI Chemicals, FA - 005) emitting a green light, both of which are excited by a light from a violet LED emitter, and containing the equivalent weight of these two kinds of the pigments into a polycarbonate having the property to guide light may form a light guiding body for guiding light from a light source. Practically, a violet LED emitter was incorporated in this light guiding body for guiding light from a light source, and a white luminescent color was confirmed. Therefore, the light source part for the light guiding type illumination device can also employ the light guiding body for guiding light from a light source made by using a violet LED emitter and the foregoing method.

The reflection layer 6a may employ, other than the foregoing, a metal such as a silver, nickel, chrominum, palladium, or rhodium, a metal containing at least one or more of alloys or oxides of these metals, or a material having a high reflectance in the visible light range as made of dielectric multilayer films.

Further, all the foregoing reflection layers may be provided with colored layers on the upper surfaces. For example, applying a yellow film capable of absorbing a blue color on the upper surface of a silver reflection plate (LU - 02 - AM50 produced by Mituitoatu Chemicals) by using a transparent optical adhesive will give a view of a gold colored reflection light. Using this for a reflection layer can provide a colored illumination.

The reflection plates 7a may employ, other than the foregoing, a metal such as a silver, nickel, chrominum, palladium, or rhodium, an alloy of these metals, a metal containing at least one or more of oxides of these metals, or a material having a high reflectance in the visible light range as made of dielectric multilayer films.

Further, if the reflection plates 7a are replaced with a light storing substance, this part functions as an auxiliary light source in the same manner as the case that the connecting part for guiding light from a light source into the light guiding type illumination device contains the light storing substance, and continues to emit light for a certain period of time after the light source is turned off, thus realizing energy saving. As for a light storing substance, the one introduced in the section of the connecting part for guiding light from a light source into the light guiding type illumination device is preferable.

The light scattering layer 8 uses the PNLC layer in this case, however, it is not limited to the PNLC as long as it is formed of a light scattering type liquid crystal capable of scattering an incident light.

When a light guiding type illumination device was fabricated in the foregoing structure, the optical design of the dot print for a scattering function in the conventional surface illumination device and the optical working of the light guiding plate became needless, and the element for adjusting an outgoing direction of light such as a diffusion plate became needless owing to the scattering effect by the light scattering type liquid crystal, thereby realizing a light guiding type illumination device having a very uniformly white illuminating surface that is inexpensive and simple.

Further, the light storing substance was contained in the connecting part for guiding light from a light source into the light guiding type illumination device, and the light storing substance was placed on the sides of the light guiding type illumination device; and the result confirmed that the part functioned as an auxiliary light source and continued to emit light for a certain period of time after the light source was turned off. Thus, this effect can provide an illumination device of the energy saving type.

Further, to dispose a colored layer on the upper side of the reflection layer enabled the light guiding type illumination device to be used for the illumination device pursuing preference such as a colored illumination, which expanded the application range of the product.

### (Embodiment 2)

As another embodiment of the light guiding type illumination device, for example, for a large screen, Fig. 6 illustrates the light guiding type illumination device employing an EL emitter for the light source and having a gradation in the scattering intensity of the light scattering layer in a perspective view.

In Fig. 6, the upper and lower substrates 10a, 10b are transparent glass substrates. The EL emitter 1c is a light source, and is directly adhered on one side of the light guiding type illumination device by means of a highly transparent adhesive double coated tape 2c. And, the EL emitters lc is designed such that a light form the light source does not fall under the reflection layer 6a and effectively falls on the light guiding type illumination device. The reflection layer 6a is a polyester film having an silver film on the surface. The reflection plates 7a are placed on the three sides (two sides in Fig. 5) except for the side having the light source for the light guiding type illumination device, and are silver films, the same as the reflection layer 6a. The light scattering layer 8 is the PNLC. The PNLC layer has a gradation in the scattering intensity to the direction that an incident light from the light source is guided in. This gradation is equipped in order to uniformly guide light from a light source into the entire light guiding type illumination device because of the large size of the light guiding type illumination device. Practically, the gradation is such that the scattering intensity of the light scattering layer increases as the distance from the light source increases.

To adhere the reflection layer 6a to the lower substrate 10b and to fasten the reflection plates 7a to the light guiding type illumination device both employ a transparent optical adhesive, which does not leak light outside the light guiding type illumination device.

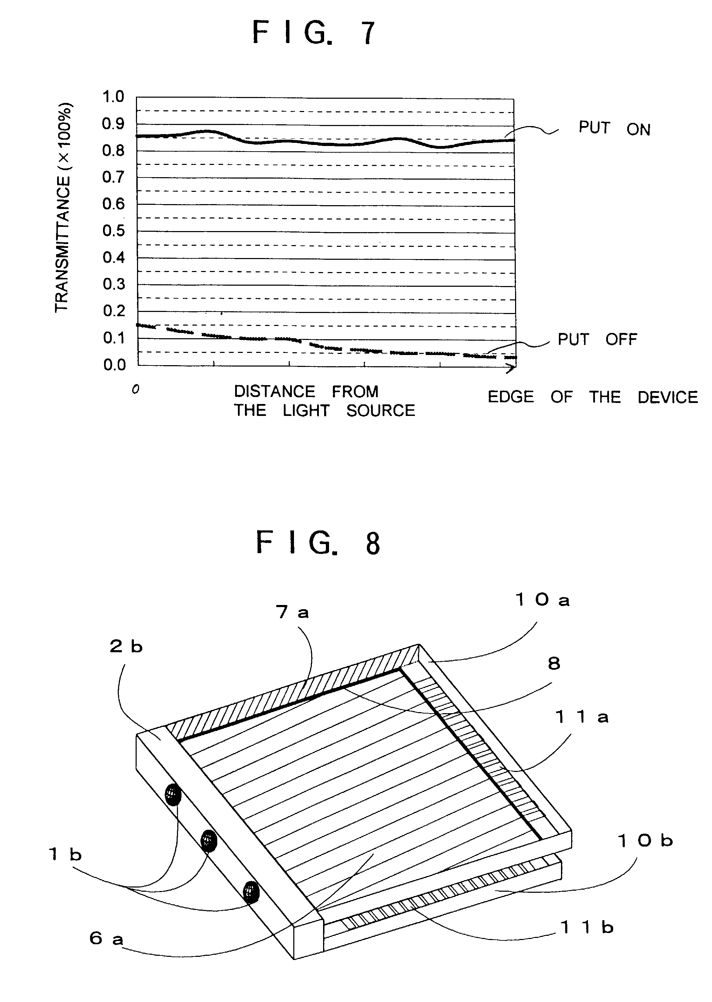

The light scattering layer 8 was fabricated in the same manner as in the embodiment 1. In order to apply a gradation to the scattering intensity of the PNLC layer, a method was adopted which an ultraviolet filter having a gradation to the ultraviolet cutoff effect was disposed on the upper part of the substrate and an ultraviolet light was exposed above the substrate, when the polymer inside the PNLC was hardened by the exposure of an ultraviolet light. As to a light guiding type illumination device thus fabricated, Fig. 7 graphs a relation between the transmittance of the light scattering layer and the distance from the light source, when the light source is put on and off. This graph finds that this light guiding type illumination device emits a considerably uniform plane light when the light source is on. Incidentally, as another method of applying a gradation to the scattering intensity of the PNLC layer, when the polymer inside the PNLC is hardened by the exposure of an ultraviolet light, gradually opening the shatter of an ultraviolet lamp, creating surface irregularities of the ultraviolet exposure intensity on the substrate, and giving irregularities to the scattering intensity of the PNLC may be adopted. Further, when adhering the upper and lower substrates, making a narrower gap between the substrates near the light source, adhering the upper and lower substrates in the so-called wedged cell, and thereafter, injecting the PNLC by means of the common method, and exposing the substrates in an ultraviolet light may be adopted to give irregularities to the scattering intensity of the PNLC.

A light guiding type illumination device, for example, for a face illumination by a large screen, was fabricated in the foregoing structure, which was inexpensively and easily made. And, the light guiding type illumination device having a very uniform and white illuminating face was realized.

Incidentally, apart from the foregoing, a light guiding type illumination device having the scattering intensity two-dimensionally patterned was fabricated by applying the method of applying a gradation to the light scattering layer 8. This can easily be made in such a manner that, when the polymer inside the PNLC is hardened by the exposure of an ultraviolet light, a filter having specific two-dimensional patterns, patterns to be desirably illuminated as are cut out on, for example, a black absorbing plate, and the like are disposed on the upper part of the substrate to be exposed in the ultraviolet light. In a part under the filter, not exposed by the ultraviolet light, the polymer is gradually hardened; and therefore, it is preferable to expose again under a very weak ultraviolet light as a fixing treatment. This exposure may be about 4 mW/cm², for 25 seconds by a metal halide lamp.

The light guiding type illumination device as described above was fabricated, and the illuminating light had two-dimensional patterns, and the result turned out to be able to provide a light guiding type illumination device suitable for pursuing preference which was different from the conventional. For example, the light guiding type illumination device was used for an illuminating device installed on the back of a display panel for advertisement and the two-dimensional patterns for the light guiding type illumination device was fabricated so as to match the content of the display panel for advertisement, which found that the light guiding type illumination device could provide a very interesting display. Further, since the light guiding type illumination device itself has strength and weakness of the two-dimensional patterns in the scattering intensity, the light guiding type illumination device itself can be used also for a display device. Therefore, a broad application to products can be expected to exceed the range of a mere surface illumination device.

### (Embodiment 3)

AS an embodiment of a light guiding type display device, Fig. 8 illustrates a light guiding type display device using an LED emitter for a light source in a perspective view.

In Fig. 8, the upper and lower substrates 10a, 10b are transparent glass substrates. The LED emitters 1b are light sources, and red, green, and blue of the LED emitters 1b are mixed and changed into white. The LED emitters 1b are incorporated into the light guiding body 2b for guiding light from a light source. The light guiding body 2b for guiding light from a light source is formed of a white polycarbonate, and is in an optically tight contact with one side of the light guiding type display device. And, the light guiding body 2b is designed such that a light form the light source does not fall under the reflection layer 6a and effectively falls on the light guiding type display device. The reflection layer 6a is formed on the upper surface of the lower substrate inside the light guiding type display device by the sputtering method, and the material is aluminum. The upper and lower transparent electrodes 11a, 11b are patterned on the upper substrate 10a and the reflection layer 6a, respectively, and the material of these is ITO. The reflection plate 7a is placed on one side other than the side having the light source for the light guiding type display device and the two sides having the electrodes, and is formed of aluminum, the same as the reflection layer 6a. The light scattering layer 8 is formed of the PNLC, and the thickness of the layer is about 9 mm. This layer is made in the same manner as in the embodiment 1. To adhere the reflection plate 7a to the light guiding type display device employs a transparent optical adhesive, which does not leak light outside the light guiding type display device.

The upper and lower substrates 10a, 10b may use transparent polymer films other than the foregoing. As for a base material used for the upper and lower substrates, a material having the property to guide light is better suited. Further, the lower substrate 10b is not limited to a transparent one, specially when the reflection layer 6a is formed on the upper surface thereof.

The LED emitters 1b for the light source may emit a colored light by using a combination of the other luminescent colors than the combination of the foregoing colors or a monochromatic light source. Or, an incandescent lamp, EL emitter, FL lamp, and other light sources may be used. When using an incandescent lamp or a FL lamp, a reflection case to converge light is preferably used; and when using an EL emitter, it is preferable to bring the EL emitter body into a direct and tight contact with a surface of the light guiding type display device on which an incident light falls so as to guide light efficiently into the light guiding type display device. Further, even when using this kind of light source, the light source may emit a colored light by using a combination of the other luminescent colors than the white color or a monochromatic light source.

Further, a connecting part for guiding light from the light source into the light guiding type display device, for example, the light guiding body for guiding light from a light source may use a material containing the light storing substance. A material (produced by NEMOTO Chemical Specialties) in which strontium aluminate SrAl 202 is the base crystal and rare earth elements are added on, or a compound in which a small quantity of copper is added in zinc sulfide ZnS is suited for the light storing substance. The effect of the light storing substance causes the foregoing connecting part to function as an auxiliary light source, and the connecting part continues to emit light for a certain period of time after the light source is turned off. Further, even when using the light guiding type display device as a normal reflection type display device without lighting up the light source, this connecting part can store light from outside as a light energy. Thus, the light guiding type display device of this type can save a considerable energy.

Incidentally, generally the LED is a colored emitter, and in the foregoing case, mixing the three colors of red, green, and blue produces a white color for the light source. However, the white light source may be achieved, as another means, by employing a violet LED emitter for the light source and using a fluorescent material having a light wavelength transforming function to transform a short wavelength into a long wavelength. For example, using a red fluorescent pigment (SHINROIHI Chemicals, FA - 001) emitting a red light and a green fluorescent pigment (SHINROIHI Chemicals, FA - 005) emitting a green light, both of which are excited by a light from a violet LED emitter, and containing the equivalent weight of these two kinds of the pigments into an acrylic resin having the property to guide light may form a light guiding body for guiding light from a light source. Practically, a violet LED emitter was incorporated in this light guiding body for guiding light from a light source, and a white luminescent color was confirmed. Therefore, the light source part for the light guiding type display device can also employ the light guiding body for guiding light from a light source made by using a violet LED emitter and the foregoing method.

The reflection layer 6a may employ, other than the foregoing, a metal such as a silver, nickel, chrominum, palladium, or rhodium, a metal containing at least one or more of alloys or oxides of these metals, or a material having a high reflectance in the visible light range as made of dielectric multilayer films.

Further, the reflection layer 6a may be provided with a colored layer on the upper surface. For example, applying a yellow film capable of absorbing a blue color on the upper surface of a silver reflection plate (LU - 02 - AM50 produced by Mituitoatu Chemicals) by using an adhesive will give a gold colored reflection light to human eyes. Using these combinations for the reflection layer can present a white display by the light scattering effect of the PNLC layer when no voltage is applied, and a color (gold) display by the colored layer overlying the reflection layer when a voltage is applied because the PNLC layer loses the light scattering capability under this condition.

Incidentally, the installation location of the reflection layer and the member in which the reflection layer is combined with the colored layer may be either inside (on the upper surface of the lower substrate) of the light guiding type display device as above, or outside (on the lower surface of the lower substrate) of the light guiding type display device. However, to install the reflection layer on the lower surface of the lower substrate can create double displayed images, which makes the displayed contents difficult to see. The double displayed images result from that the external light transmitting through the light penetrating area of the PNLC layer is reflected mostly on the reflection layer placed on the lower surface of the lower substrate, however, about 10% of the incident external light is also reflected on the transparent electrode placed on the upper surface of the lower substrate to cause parallax by the two kinds of the reflected lights. However, when integrating the light guiding type illumination device into a product containing a preference pursuing factor such as a wristwatch, the double displayed images will give an interesting stereoscopic view. Incidentally, installing the reflection layer on the upper surface of the lower substrate can avoid this phenomenon and make the display content easy to observe. When installing the reflection layer on the lower surface of the lower substrate, the reflection layer may be placed directly on the lower surface of the lower substrate, or may be adhered to the lower substrate by means of a transparent optical adhesive, etc.

The reflection plate 7a may employ, other than the foregoing, a metal such as a silver, nickel, chrominum, palladium, or rhodium, a metal containing at least one or more of alloys or oxides of these metals, or a material having a high reflectance in the visible light range as made of dielectric multilayer films.

Further, if the reflection plate 7a is replaced with a light storing substance, this part functions as an auxiliary light source in the same manner as the case that the connecting part for guiding light from a light source into the light guiding type display device contains the light storing substance, and continues to emit light for a certain period of time after the power for the light source is turned off, thus achieving energy saving. As for a light storing substance, the one introduced in the section of the connecting part for guiding light from a light source into the light guiding type display device is preferable.

The material of the upper and lower transparent electrodes 11a, 11b may be SnO2 other than the foregoing. The electrode patterns may be the active matrix type using an active element such as the TFT, other than the segment type and the simple matrix type.

When using the simple matrix or the active matrix, the electrode patterns are stretched on virtually the whole surface of the display screen; and therefore, the electrode formed on the lower substrate may utilize the metal reflection layer, instead of adopting a transparent electrode using ITO, etc. For example, after an aluminum film is formed on the lower substrate, the aluminum film may be patterned into an electrode shape to be used as the electrode. In this case, the reflection layer is not necessary to be placed other than this.

The light scattering layer 8 uses the PNLC layer in this case, however, it is not limited to the PNLC as long as it is formed of a light scattering type liquid crystal capable of scattering an incident light. For example, the PSCT (Polymer Stabilized Cholesteric Texture) being a kind of the polymer stabilized phase transition type liquid crystal may be used which behaves on the reverse mode (transparent state when no voltage is applied, scattering state when a voltage is applied) to the PNLC.

A light guiding type display device fabricated as above has a structure considerably resembling the light guiding type illumination device in the embodiment 1, and is furnished with the effective functions that the light guiding type illumination device contains. Therefore, without locating the light source above the display surface, guiding light into the side of the light guiding type display device could achieve a bright display surface. Further, the thickness of the light guiding type display device including the light source could be thinned to the same extent as the panel thickness.

Further, lighting the light source even when the external light is bright can enhance the scattering intensity of the scattering areas where no voltage is applied, thereby providing a display device of a high contrast.

Further, the light storing substance was contained in the connecting part for guiding light from a light source into the light guiding type display device, and the light storing substance was placed on the sides of the light guiding type display device; and the result confirmed that the part functioned as an auxiliary light source and continued to emit light for a certain period of time after the power of the light source was turned off. Thus, this effect can provide a light guiding type display device of the energy saving type.

Further, to dispose a colored layer on the upper surface of the reflection layer realized a monochromatic display such as a white display by a scattered light when no voltage was applied, and a gold display by a colored layer on the upper surface of the reflected layer when a voltage was applied.

Further, to dispose the reflection layer inside (on the upper surface of the lower substrate) of the light guiding type display device avoided double displayed images. Furthermore, employing a metal for the material of the reflection layer and patterning the metal into an electrode shape could use the electrode also as the reflection layer, which could simplify the manufacturing process of the light guiding type display device containing the reflection layer.

### (Embodiment 4)

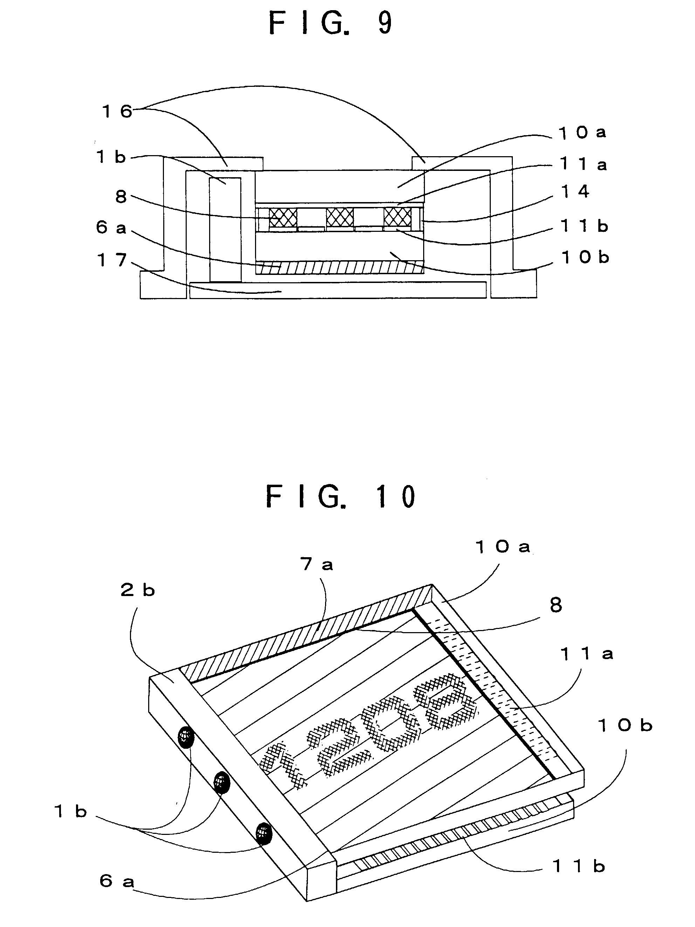

As another embodiment of the light guiding type display device, Fig. 9 illustrates a light guiding type display device for a watch built-in type in a typical sectional view.

In Fig. 9, the upper and lower substrates 10a, 10b are transparent glass substrates, both of which are 0.4 mm thick. The LED emitter 1b is a light source provided for a time when the external light becomes dim, and a yellow emitting LED (TLY 221 produced by Toshiba). This LED emitter 1b is mounted on a printed circuit board 17 placed under the light guiding type display device. Although the LED 1b is not adhered to the light guiding type display device, the thickness of the LED emitter 1b is about 1 mm and in contrast, the thickness of the light guiding type display device is a little more than 0.8 mm, which does not show much difference in thickness; and therefore, light from a light source is guided into the light guiding type display device comparably efficiently. This light guiding type display device takes on one-sided electrode structure in which common and segment electrodes both are drawn out to one side of the glass substrate. Support frames 16 hold down the light guiding type display device from the upper side of the light guiding type display device to get conductivity between the electrodes and a conductive rubber (not illustrated). The reflection layer 6a is made of a silver reflection plate (LU - 02 - AM50 produced by Mituitoatu Chemicals), and placed directly on the outer side of the light guiding type display device. The upper and lower transparent electrodes 11a, 11b are both made of ITO, and patterned in segment. The light scattering layer 8 is made of the PNLC with the layer thickness of about 9 µm, and is fabricated in the same manner as in the embodiment 1.

The reflection layer 6a may be provided with a colored layer on the upper surface, while it is made of a silver plate only in the foregoing. For example, applying a yellow film capable of absorbing a blue color by using an adhesive will give a gold colored reflection light to human eyes. Using these combinations for the reflection layer can present a white background color by the scattered light and a color (gold) display by the colored layer overlying the reflection layer when a voltage is applied.

The light scattering layer 8 uses the PNLC layer the same as the foregoing, however, it is not limited to the PNLC as long as it is formed of a light scattering type liquid crystal capable of scattering an incident light.

The watch built-in type light guiding type display device fabricated as above can display a white color by the scattered light when no voltage is applied, and a silver color by the reflection layer when a voltage is applied; thus the light guiding type display device can present such a novelty in display color as not seen up to now. For example, to dispose a colored layer on the upper surface of the reflection layer enables a colored (for example, gold) display when a voltage is applied. Such a glossy display will produce a feeling of high quality, thereby giving value of a jewel to a digital watch.

Further, the light guiding type display device has a structure considerably resembling the light guiding type illumination device in the embodiment 1, and is furnished with the effective functions that the light guiding type illumination device contains. Therefore, without locating the light source above the display surface, guiding light into the side of the light guiding type display device could achieve a bright display surface. Further, the thickness of the light guiding type display device including the light source could be thinned to the same extent as the panel thickness. This effect could provide the light guiding type display device most suitable for a wristwatch of miniaturization, for example, a wristwatch for a lady.

Further, lighting the light source even when the external light is bright can enhance the scattering intensity of the scattering areas where no voltage is applied, thereby providing a display device of a high contrast.

### (Embodiment 5)

AS another embodiment of a light guiding type display device, Fig. 10 illustrates a light guiding type display device using the PSCT being a kind of the polymer stabilized phase transition type liquid crystal in a perspective view.

In Fig. 10, the upper and lower substrates 10a, 10b are transparent glass substrates. The LED emitters 1b are colored light sources, and are incorporated into the light guiding body 2b for guiding light from a light source. The light guiding body 2b for guiding light from a light source is formed of a white polycarbonate, and is in an optically tight contact with one side of the light guiding type display device. And, the light guiding body 2b is designed such that a light form the light source does not fall under the reflection layer 6a and effectively falls on the light guiding type display device. The reflection layer 6a is formed on the upper surface of the lower substrate inside the light guiding type display device by the sputtering method, and the material is aluminum. The upper and lower transparent electrodes 11a, 11b are patterned in segment on the upper substrate 10a and the reflection layer 6a, respectively, and the material of these is ITO. Although upper and lower orientation films are present on the upper part of the upper and lower transparent electrodes 11a, 11b, respectively, they are omitted in the drawing. The reflection plate 7a is placed on one side other than the side having the light source for the light guiding type display device and the two sides having the electrodes, and is formed of aluminum, the same as the reflection layer 6a. The light scattering layer 8 is formed of the PSCT, and the thickness of the layer is about 9 µm. This layer is made in such a manner that a mixed liquid in which an ultraviolet hardening type polymer, a nematic liquid crystal, ultraviolet hardener, and an optical activator, etc. are uniformly mixed and dissolved is injected in an isotropic state into a space between the upper and lower substrates 10a, 10b adhered with the gap of 9 µm, having the horizontal orientation processing of the upper and lower orientation films applied, the mixed liquid is exposed under a weak ultraviolet light of 0.1 mW/cm², for about one hour, and again exposed under 40 mW/cm², for 25 seconds, to harden the polymer only. The PSCT layer takes on a scattering state when a voltage is applied, and a transparent state when no voltage is applied, showing the reverse display mode to the PNLC layer. To adhere the reflection plate 7a to the light guiding type display device employs a transparent optical adhesive, which does not leak light outside the light guiding type display device.

The light scattering layer 8, which is a PSCT layer, is not necessarily limited to the PSCT, as long as it is a reverse mode scattering type liquid crystal that assumes a transparent state when no voltage is applied and a scattering state when a voltage is applied.

The light guiding type display device fabricated as above could display a silver color by the reflection layer when no voltage is applied, a color of light from a light source scattered by the scattering areas when a voltage is applied; thus the light guiding type display device could present a monochromatic display producing a different mood, by the reverse mode to the embodiment 4. Further, preparing multiple colors for colored light sources placed in the light guiding body for guiding light from a light source and switching the light sources could present various monochromatic displays by means of one light guiding type display device. Therefore, this type of light guiding type display device is considered to possibly be applied to an interesting field as well as a wristwatch.

Further, the light guiding type display device has a structure considerably resembling the light guiding type illumination device in the embodiment 1, and is furnished with the effective functions that the light guiding type illumination device contains. Therefore, without locating the light source above the display surface, guiding light into the side of the light guiding type display device could achieve a bright display surface. Further, the thickness of the light guiding type display device including the light source could be thinned to the same extent as the panel thickness.

Further, this light guiding type display device displays in the reverse mode to the PNLC, and produces scattering of light on the electrodes. The segment pattern electrodes are very small compared to the display screen. Therefore, when lighting the light source, light from the light source converged on the scattering areas (the electrodes) much more intensely than the case of the embodiments 3, 4 using the PNLC, which consequently achieved a light guiding type display device of a very high contrast.

As described hereinabove, the light guiding type illumination device has a light scattering layer held by two substrates, reflection layer disposed on the rear of the light scattering layer, and light source of which light falls on the end faces of the substrates and the light scattering layer; thereby the optical design of the dot print for a scattering function in the conventional surface illumination device and the optical working of the light guiding plate become needless. And, the element for adjusting an outgoing direction of light such as a diffusion plate becomes needless owing to the scattering effect by the light scattering type liquid crystal, thereby realizing a very uniformly white illuminating surface that is inexpensive and simple. Further, since the light guiding type illumination device has the two substrates that have the light guiding function, the light guiding effect can be expected to increase.

Further, by applying a gradation to the scattering intensity of the light scattering layer in the direction of guiding an incident light, the uniform and white illuminating face inexpensive and easily made is achieved, which is suitable, for example, for use in a face illumination by a large screen. Further, by patterning the electrodes two-dimensionally into the transparent state and the scattering state, the light guiding type illumination device can provide an illuminating display suitable for pursuing preference which is different from the conventional. For example, the light guiding type illumination device can provide a display very interesting when used in a display panel for advertisement.

Further, since the light storing substance contained in the connecting part for guiding light from a light source into the light guiding type illumination device is placed on the sides of the light guiding type illumination device, the part can be used as an auxiliary light source and this effect can provide an illumination device of the energy saving type.

Further, since a material to efficiently reflect light is used for the reflection layer and a colored layer is disposed on the upper surface thereof, the light guiding type illumination device can be used in an illuminating device to pursue preference such as colored illumination, etc.

Next, the light guiding type display device of the invention has a light scattering layer held by two substrates having electrodes, reflection layer disposed on the rear of the light scattering layer, and light source located before the reflection layer, of which light falls on the end faces of the substrates and the light scattering layer; and thereby, without locating the light source above the display surface, by guiding light into the side of the light guiding type display device, a bright display surface can be achieved. Further, the thickness of the light guiding type display device including the light source can be thinned to the same extent as the panel thickness. Further, by lighting the light source even when the external light is bright, the scattering intensity of the scattering areas can significantly be enhanced, thereby providing a display device of a very high contrast.

Further, since the light storing substance contained in the connecting part for guiding light from a light source into the light guiding type display device is placed on the sides of the light guiding type display device, the part can be used as an auxiliary light source and this effect can provide a light guiding type display device of the energy saving type.

Further, since a material to efficiently reflect light is used for the reflection layer and a colored layer is disposed on the upper surface thereof, a monochromatic display can be realized such that the scattering areas present a white color by the scattered light and the transparent areas present a gold color by the colored layer overlying the reflection layer. Thus, the light guiding type display device can also be used for an illumination device to pursue preference such as a colored display. Especially, applying this effect to a display device for a wristwatch or the like can produce a feeling of high quality, thereby giving value of a jewel to a digital watch.

Further, since the disposition of the reflection layer is located inside (on the upper surface of the lower substrate) of the light guiding type display device, double displayed images can be avoided. And, since a metal is used for the material of the reflection layer and the metal is patterned into an electrode shape, the electrode can also be used as the reflection layer, which can simplify the manufacturing process of the light guiding type display device containing the reflection layer.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A light guiding illumination device, comprising:
a light scattering layer (8) held between at least two substrates (10a, 10b) facing each other;
a reflection layer (6a) disposed at a base surface of the illumination device; and
a light source (1a) disposed and arranged such that light therefrom is initially incident on end edge faces of the substrates and the light scattering layer.

2. A device as claimed in Claim 1, wherein the light scattering layer is patterned two-dimensionally into a transparent state and a scattering state.

3. A device as claimed in Claim 1, wherein the light scattering layer has a gradation in a scattering intensity in relation to a direction in which an incident light form the light source is guided.

4. A light guiding display device, comprising:
a light scattering layer (8a, 8b) held between at least two substrates (10a, 10b) and having electrodes (11a).
a reflection layer (6a) disposed on a rear surface of the light scattering layer; and
a light source (1b) arranged and disposed such that light therefrom is initially incident on end edges faces of the substrates and the light scattering layer located above the reflection layer.

5. A light guiding display device as claimed in claim 4, wherein at least some of the electrodes are transparent.

6. A device as claimed in any preceding claim, wherein the light scattering layer is a scattering type liquid crystal layer.

7. A device as claimed in claim 6, wherein the scattering type liquid crystal layer is an ultraviolet hardening type liquid crystal layer.

8. A device as claimed in claim 7, wherein the ultraviolet hardening type liquid crystal layer is a polymer network liquid crystal layer.

9. A device as claimed in any preceding claim, wherein the substrates are provided with reflection plates on at least one or more sides thereof.

10. A device as claimed in any preceding claim, wherein the substrates contain a light storing substance on a least one or more sides thereof.

11. A device as claimed in any preceding claim, wherein the reflection layer is formed of a metal such as an aluminum, silver, nickel, chrominum, palladium, or rhodium, a metal containing at least one or more of alloys or oxides of these metals, or dielectric multilayer films.

12. A device as claimed in claim 11, wherein at least one or more colored layers are formed on the upper surface of the reflection layer.

13. A device as claimed in any preceding claim, wherein the light source is an incandescent lamp, EL emitter, FL lamp, or LED emitter.

14. A device as claimed in any preceding claim, wherein the LED emitter emits a violet light, is incorporated into a light guiding body with fluorescent materials dispersed, and is optically adhered to the substrates.

15. A device as claimed in claim 13, wherein the light source contains a light storing substance.
